# FASCICULE DE BREVET EUROPEEN

(11) **EP 1 123 545 B1**
(45) Date de publication et mention de la délivrance du brevet: **23.03.2011**
(21) Numéro de dépôt: 99947521.3
(22) Date de dépôt: 11.10.1999
(51) Int. Cl.: G11B 20/00, G06F 1/00

(54) **METHODE DE COPIE EVITANT LA DUPLICATION BIT A BIT DE DONNEES NUMERIQUES ET DISPOSITIF DE LECTURE POUR LA MISE EN OEUVRE DE LA METHODE**
KOPIERVERFAHREN WELCHES DIE BITGENAUE DUPLIKATION VON DIGITALEN DATEN VERMEIDET UND LESEVORRICHTUNG FÜR DIESES VERFAHREN
COPY METHOD AVOIDING BIT-TO-BIT DUPLICATION OF DIGITAL DATA AND READING DEVICE FOR IMPLEMENTING SAME

(30) Priorité: 19.10.1998 FR 9813074
(43) Date de publication de la demande: 16.08.2001
(73) Titulaire: THOMSON multimedia, 92100 Boulogne Billancourt (FR)
(72) Inventeur: FURON, Teddy, F-35000 Rennes (FR); CHEVREAU, Sylvain, F-35000 Rennes (FR); DIEHL, Eric, F-35340 Liffre (FR)
(74) Mandataire: Kohrs, Martin
(86) Numéro de dépôt international: PCT/FR1999/002425
(87) Numéro de publication internationale: WO 2000/023993

(56) Documents cités:
- EP-A- 0 302 710
- EP-A- 0 464 320
- EP-A- 0 553 545
- EP-A- 0 593 305
- EP-A- 0 773 490
- EP-A- 0 785 547
- EP-A- 0 802 527
- EP-A- 0 844 611
- JP-A- 10 003 432
- US-A- 5 400 319
- US-A- 5 745 568
- PATENT ABSTRACTS OF JAPAN vol. 017, no. 231 (P-1532), 11 mai 1993 (1993-05-11) & JP 04 360068 A (MITSUBISHI ELECTRIC CORP), 14 décembre 1992 (1992-12-14)
- ANONYMOUS: "Preventing Unauthorized Access to Diskette Loaded Microcode. July 1978." IBM TECHNICAL DISCLOSURE BULLETIN, vol. 21, no. 2, pages 836-837, XP002109203 New York, US
- ANONYMOUS: "Software Serial Number" IBM TECHNICAL DISCLOSURE BULLETIN, vol. 26, no. 7B, pages 3918-3919, XP002073044 New York, US

## Description

La présente invention concerne une méthode de copie évitant la duplication bit à bit de données numériques issues d'une première source sur un support. Elle concerne aussi un dispositif utilisé pour mettre en oeuvre cette méthode.

Les données numériques présentent la propriété de pouvoir être copiées sans perte notable de qualité. En effet, la copie consiste à transmettre de la source vers le dispositif enregistreur une série d'informations binaires, à savoir des « 1 » et « 0 ». Les erreurs survenant habituellement lors de la copie sont facilement corrigées en utilisant des méthodes de correction d'erreurs bien connues. Ainsi, lorsqu'un support d'information ou une source de données contient des données numériques, il est relativement simple de les enregistrer à l'identique sur un support enregistrable.

Pour protéger des données numériques contre la copie illicite, différentes méthodes sont utilisées.

Le plus souvent, le fournisseur munit le support de données numériques tel que la disquette dans le cas d'un logiciel, d'une marque interdisant toute copie.

Dans les documents EP-A-0 773 490 et EP 0 802 527, il est proposé un système de protection des informations stockées dans des supports d'enregistrement dans lequel chaque support comporte un identifiant.

Une autre façon de protéger des données numériques contre la copie consiste à les doter d'un tatouage ou "watermark", c'est-à-dire de données auxiliaires attachées aux données numériques. Le tatouage doit être non-modifiable et non-effaçable. Dans ce cas, la lecture des données se fait à l'aide d'une clé privée qui identifie le tatouage. Lors d'une éventuelle copie des données numériques tatouées, une clé privée est requise pour remettre en place le tatouage sur la copie, sans quoi la copie devient illégale puisque dépourvue de tatouage. Les données numériques copiées sans tatouage ne sont plus lues par le lecteur car celui-ci n'identifie pas de tatouage là où il devrait en trouver un. Ainsi, le tatouage ne permet pas de faire de copie sans la clé privée.

Ces méthodes connues de protection des copies sont en général efficaces lorsque le support est traité par des appareils de lecture ou d'enregistrement conformes. Toutefois, ces méthodes n'évitent pas la duplication par un pirate qui crée un double ou clone le plus semblable possible à l'original en réalisant ce qui est appelé une copie bit-à-bit.

La présente invention a pour but de proposer une méthode de copie évitant la duplication non-autorisée de données numériques issues d'une première source sur un support, cette méthode ne permettant pas une copie bit-à-bit des informations numériques.

La présente invention a aussi pour but de fournir un dispositif de lecture comportant des circuits permettant la mise en oeuvre de ladite méthode.

En conséquence, la présente invention a pour objet une méthode de copie évitant la duplication bit à bit de données numériques issues d'une source de données numériques sur un support.

Des caractéristiques de la présente invention sont définies dans les revendications ci-jointes.

D'autres caractéristiques et avantages de la présente invention apparaîtront à la lecture de la description d'un mode de réalisation préférentiel faite avec référence au dessin ci-annexé dans lequel :

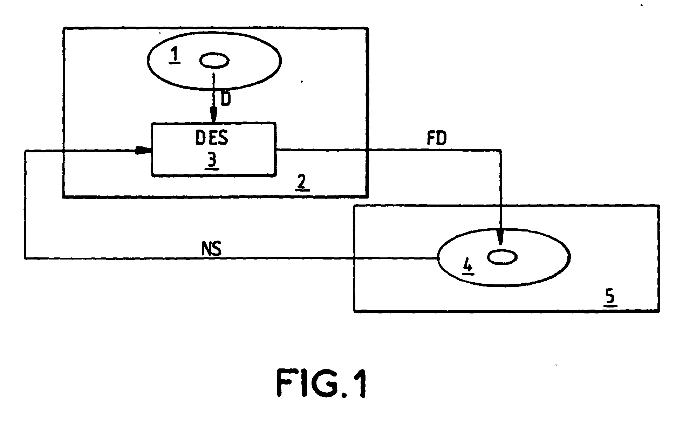

La figure 1 est une vue schématique sous forme de blocs d'un dispositif de lecture et d'un dispositif enregistreur permettant la copie d'un premier support sur un second support.

La présente invention sera décrite en se référant à la lecture de données numériques enregistrées sur un support numérique tel qu'un DVD pour Digital Versatile Disc et copiées sur un second support vierge constitué lui aussi par un DVD qui dans ce cas doit être enregistrable, à savoir un DVD-R. Toutefois, il est évident pour l'homme de l'art que d'autres sources d'informations numériques peuvent être utilisées, notamment des informations numériques issues d'un décodeur et envoyées par un "broadcaster" ou des informations numériques stockées sur des supports tels qu'une bande magnétique, un disque optique enregistrable ou non, à savoir un CD, un CD-R, CD-RW, DVD, DVD-R, un disque magnéto-optique ou similaire. Le support d'enregistrement est constitué par une bande magnétique enregistrable, un CD-R, un CD-RW, un DVD-R ou un disque magnéto-optique permettant de stocker de l'information audio et/ou vidéo sous forme numérique.

Comme représenté sur la figure 1, la méthode de copie conforme à la présente invention permet de copier les informations numériques D enregistrées sur un DVD 1 en utilisant un dispositif de lecture 2 muni d'un circuit de formatage 3 et les données FD qui peuvent être dupliquées, sont enregistrées sur un DVD-R 4 inséré dans un dispositif enregistreur 5.

Conformément à la présente invention, le DVD-R 4 constitué par un DVD-R vierge comporte un numéro de série qui est enregistré de manière infalsifiable lors de la fabrication du DVD-R. Ce numéro de série qui est choisi de manière à être unique ou à présenter une très faible probabilité d'être présent sur deux supports différents, est stocké dans une zone enfouie du disque telle que la zone intitulée « lead-in area » en langue anglaise, à savoir l'amorce de la piste. Comme expliqué de manière plus détaillée ci-après, ce numéro de série est utilisé pour formater les données numériques lues à partir du DVD 1 original.

Conformément à la méthode revendiquée dans la présente invention, les données lues sur le DVD 1 par le dispositif de lecture 2 sont envoyées sur un circuit de formatage 3 qui réalise un formatage des données en utilisant le numéro de série lu sur le DVD-R vierge. On obtient ainsi, en sortie du dispositif de lecture, des données FD formatées de manière spécifique, qui sont envoyées sur le dispositif enregistreur 5 où elles sont enregistrées sur le DVD-R 4.

Pour réaliser un formatage des données tel que les données enregistrées sur le DVD-R ne puissent pas être copiées bit-à-bit mais puissent toutefois être relues ultérieurement par le dispositif de lecture, à savoir pour réaliser une copie dite licite, différents procédés de formatage peuvent être utilisés. Un des procédés de formatage classique est un algorithme d'encryptage à clé secrète tel que le D.E.S. pour "Data Encryption Standard" en langue anglaise bien connu des spécialistes. Pour éviter toute copie par un pirate, la clé utilisée dans ce cas sera une clé construite à l'aide d'une clé secrète et du numéro de série lu sur le DVD-R vierge. Pour réaliser le formatage en utilisant cet algorithme, les données enregistrées sur le DVD d'origine sont découpées en blocs de 64 bits puis formatées par le D.E.S. en utilisant une clé de 56 bits obtenue à partir des numéros de série. On obtient en sortie des paquets de données formatées ou chiffrées de 64 bits qui sont enregistrés par l'intermédiaire de l'appareil-enregistreur 5 sur le DVD-R 4. Si la clé est constituée par le numéro de série lui-même, le numéro de série comportera 56 bits. Toutefois, le nombre de bits du numéro de série est donné à titre d'exemple. En effet, il est possible d'appliquer l'invention à des supports dont les numéros de série ont des longueurs supérieures ou inférieures à 56 bits. Dans ce cas, on peut appliquer une troncature ou un codage canal pour amener ces numéros de série à la bonne longueur. Si la clé est, pour des raisons de sécurité, une fonction du numéro de série, elle peut être obtenue de la manière suivante :
Sachant que NS est le numéro de série du support d'enregistrement, et PS est le paramètre stocké dans les dispositifs de lecture conformes de manière sécurisée :
   - on réalise la concaténation de NS et PS pour avoir un mot (NS/PS),
   - on applique une fonction de hachage telle que la fonction SHA-1 (standard du National Institute of Standards and Technologies) et l'on obtient comme résultat le mot SHA (NS/PS) ayant une longueur de 64 bits, et
   - on réalise une troncature de ce mot pour avoir un mot de 56 bits qui servira de clé pour le DES.

La longueur des mots binaires NS et PS n'est pas fixée, car SHA-1 ne demande pas de longueur précise pour le mot d'entrée. La fonction f s'adapte à toute longueur de numéro de série.

Le DVD-R 4 ainsi copié licitement peut être lu par le dispositif de lecture 2 et les données numériques d'origine sont récupérées en utilisant l'algorithme de décryptage correspondant.

Il est aussi possible de réaliser le formatage des données numériques à dupliquer en utilisant un algorithme à clé publique tel que l'algorithme R.S.A.. Cet algorithme à clé publique est un algorithme asymétrique qui ne permet pas, lorsque l'on connaît la clé publique, de copier facilement les données formatées lors de leur lecture par le dispositif de lecture 2.

Les données se trouvant sur le DVD-R de copie n'ayant pas la même structure que les données du DVD d'origine, il n'est donc pas possible de les récupérer avec un dispositif de lecture autre qu'un dispositif de lecture conforme. D'autre part, si une copie bit-à-bit du DVD d'origine a été réalisée, le dispositif de lecture de la présente invention ne retrouve pas les informations numériques d'origine et ne va pas la lire.

Selon une caractéristique supplémentaire de la présente invention, la méthode de copie peut être précédée par une étape de vérification d'autorisation de copie telle que celle décrite dans la demande de brevet français n° 98 11860 déposée le 23 septembre 1998 au nom de THOMSON multimédia et ayant pour titre "Protection contre la copie de données numériques stockées sur un support d'information". Cette vérification d'autorisation de copie s'applique à un support d'information comprenant une première identification d'un chiffrage des données numériques, une seconde identification d'un tatouage de données numériques, une première détermination d'une première marque si le chiffrage et le tatouage ont pu être identifiés, une troisième identification d'un type du support d'information, une seconde détermination d'une seconde marque si la première marque a pu être déterminée et si un type déterminé de support d'information a pu être identifié, une quatrième identification de données de signature cryptographique accompagnant les données numériques, une troisième détermination d'une troisième marque si la seconde marque a pu être déterminée et si une donnée de signature cryptographique a pu être identifiée, une première délivrance d'une permission de copie numérique des données numériques si la troisième marque a pu être déterminée.

L'ensemble des caractéristiques décrites dans cette demande de brevet français est incorporé à la présente demande pour réaliser la vérification d'autorisation de copie.

Conformément à la présente invention, le dispositif de lecture 2 des données numériques qui peut être un lecteur de DVD, un décodeur, un lecteur de CD ou similaire, comporte un circuit de formatage 3 constitué essentiellement par un circuit intégré incluant tous les moyens nécessaires à la réalisation de l'algorithme choisi pour le formatage et permettant de stocker de manière infalsifiable certaines données telles qu'une clé secrète ou des moyens d'autorisation de copie.

Le mode de réalisation décrit ci-dessus est donné à titre d'exemple et peut être modifié sans sortir du cadre des revendications ci-jointes.

## Revendications

1. Méthode de copie évitant la duplication bit à bit de données numériques issues d'une source de données numériques (1) sur un support (4), **caractérisée en ce que** ladite méthode comporte :
- une étape de formatage des données numériques issues de ladite source de données numériques en fonction d'un numéro de série (NS) contenu dans ledit support (4) et d'un paramètre secret (PS) contenu dans tout dispositif de lecture (2) adapté à lire les données numériques issues de ladite source, ledit numéro de série (NS) étant un numéro unique pour chaque support ou présentant une faible probabilité d'être commun à deux supports, et
- une étape d'écriture desdites données formatées (FD) sur ledit support.

2. Méthode selon la revendication 1, **caractérisée en ce que** le numéro de série (NS) est enregistré de manière infalsifiable sur le support (4) lors de sa fabrication.

3. Méthode selon l'une quelconque des revendications 1 ou 2, **caractérisée en ce que** l'étape de formatage des données numériques à dupliquer est réalisé en utilisant un algorithme de cryptage à clé secrète tel que le D.E.S. ou à clé publique tel que R.S.A..

4. Méthode selon la revendication 3, **caractérisée en ce que** la clé de cryptage est fonction du numéro de série (NS) et du paramètre secret (PS).

5. Méthode selon la revendication 1, **caractérisée en ce que** lesdites données sont lues par un dispositif de lecture (2), et **en ce que** le numéro de série (NS) enregistré sur le support (4) est envoyé vers le dispositif de lecture (2).

6. Méthode selon la revendication 5, **caractérisée en ce que** l'étape de formatage des données numériques est réalisée dans le dispositif de lecture (2).

7. Méthode selon l'une quelconque des revendications 5 ou 6, **caractérisée en ce que** le dispositif de lecture (2) comporte des moyens permettant de lire le support contenant les données numériques formatées.

8. Méthode selon l'une quelconque des revendications 5 à 7, **caractérisée en ce qu'**avant d'effectuer la duplication des données numériques, elle comporte une étape de vérification d'autorisation de copie.

9. Dispositif de lecture (2) permettant la mise en oeuvre d'une méthode de copie selon l'une des revendications 1 à 8, **caractérisé en ce qu'**il contient un paramètre secret (PS) et ce que le dispositif de lecture comprend un circuit de formatage (3) adapté à recevoir le numéro de série (NS) du support sur lequel les données numériques doivent être copiées et fournissant en sortie des données formatées (FD) en fonction dudit numéro de série (NS) et du paramètre secret (PS) destinées à être copiées sur ledit support.

10. Support d'enregistrement (4) de données numériques comportant un numéro de série (NS) unique ou présentant une faible probabilité d'être commun avec celui d'un autre support, **caractérisé en ce qu'**il comporte en outre des données numériques (FD) enregistrées, lesdites données numériques (FD) étant formatées en fonction dudit numéro de série (NS) et d'un paramètre secret (PS) contenu dans un dispositif de lecture adapté à lire les données numériques.

## Claims

1. A method of copying which avoids the bit-by-bit duplication of digital data arising from a source of digital data (1) on a medium (4), **characterized in that** the method comprises:
- a step of formatting the digital data arising from said source of digital data using a serial number (NS) contained in said medium (4) and using a secret parameter (PS) contained in any reading device (2) adapted to read said digital data arising from said source, said serial number (NS) being a unique number for each medium or exhibiting a low probability of being common to two media, and
- a step of writing said formatted data (FD) on said medium.

2. The method as claimed in claim 1, **characterized in that** the serial number (NS) is recorded in a manner impossible to forge on the medium (4) during its manufacture.

3. The method as claimed in any one of claims 1 and 2, **characterized in that** the step of formatting the digital data to be duplicated is carried out using a secret key encryption algorithm such as D.E.S or public key encryption algorithm such as R.S.A..

4. The method as claimed in claim 3, **characterized in that** the encryption key is dependent on the serial number (NS) and on the secret parameter (PS).

5. The method as claimed in claim 1, **characterized in that** said digital data are read by a reading device (2), and **in that** the serial number (NS) recorded on the medium is sent to the reading device (2).

6. The method as claimed in claim 5, **characterized in that** the step of formatting is carried out in the reading device (2).

7. The method as claimed in any one of claims 5 or 6, **characterized in that** the reading device (2) comprises means making it possible to read the medium containing the formatted digital data.

8. The method as claimed in any one of claims 5 to 7, **characterized in that** before performing the duplication of the digital data, it comprises a step of checking authorization to copy.

9. A reading device (2) adapted to implement a method of copying as claimed in one of claims 1 to 8, **characterized in that** it comprises a secret parameter (PS) and **in that** the reading device comprises a formatting circuit (3) adapted to receive the serial number (NS) of the medium on which the digital data are to be duplicated and providing at the output data formatted (FD) using said serial number (NS) and secret parameter (PS) intended to be duplicated on said medium.

10. A recording medium (4) for digital data comprising a serial number (NS) being unique or exhibiting a low probability of being common to the serial number of other medium, **characterized in that** the recording medium further comprises recorded digital data (FD), said digital data (FD) being data formatted using said serial number (NS) and a secret parameter contained in a reading device adapted to read digital data.

## Patentansprüche

1. Kopierverfahren, welches die bitgenaue Duplikation von digitalen Daten, die Audio- und/oder Videoinformationen repräsentieren und von einer digitalen Datenquelle (1) stammen, auf einen Träger (4) verhindert, **dadurch gekennzeichnet, dass** das Verfahren umfasst :
- einen Schritt zur Formatierung der digitalen Daten, die von der digitalen Datenquelle stammen, in Abhängigkeit von einer Seriennummer (NS), die auf dem Träger (4) enthalten ist, und einem geheimen Parameter (PS), der in jedem Lesegerät (2) enthalten ist, das in der Lage ist, die digitalen Daten zu lesen, die von der Quelle stammen, wobei die Seriennummer (NS) aus einer einzigartigen Nummer für jeden Träger besteht oder eine geringe Wahrscheinlichkeit aufweist, dass sie für zwei Träger dieselbe ist, und
- einen Schritt zum Schreiben der formatierten Daten (FD) auf den Träger.

2. Verfahren nach Anspruch 1, **dadurch gekennzeichnet, dass** die Seriennummer (NS) während der Herstellung auf fälschungssichere Art auf dem Träger (4) abgespeichert wird.

3. Verfahren nach irgendeinem der Ansprüche 1 oder 2, **dadurch gekennzeichnet, dass** der Schritt zur Formatierung der zu duplizierenden digitalen Daten ausgeführt wird, indem ein Verschlüsselungsalgorithmus mit geheimem Schlüssel wie zum Beispiel DES oder mit öffentlichem Schlüssel wie zum Beispiel RSA verwendet wird.

4. Verfahren nach Anspruch 3, **dadurch gekennzeichnet, dass** der Verschlüsselungsschlüssel von der Seriennummer (NS) und dem geheimen Parameter (PS) abhängt.

5. Verfahren nach Anspruch 1, **dadurch gekennzeichnet, dass** die Daten von einem Lesegerät (2) gelesen werden und **dadurch**, dass die auf dem Träger (4) abgespeicherte Seriennummer (NS) an das Lesegerät (2) geschickt wird.

6. Verfahren nach Anspruch 5, **dadurch gekennzeichnet, dass** der Schritt zur Formatierung der digitalen Daten in dem Lesegerät (2) ausgeführt wird.

7. Verfahren nach irgendeinem der Ansprüche 5 oder 6, **dadurch gekennzeichnet, dass** das Lesegerät (2) Mittel umfasst, die es ermöglichen, den Träger zu lesen, der die formatierten digitalen Daten enthält.

8. Verfahren nach irgendeinem der Ansprüche 5 bis 7, **dadurch gekennzeichnet, dass** es einen Schritt zur Überprüfung der Kopierberechtigung umfasst, bevor die Duplikation der digitalen Daten durchgeführt wird.

9. Lesegerät (2), das den Einsatz eines Kopierverfahrens nach einem der Ansprüche 1 bis 8 erlaubt, **dadurch gekennzeichnet, dass** es einen geheimen Parameter (PS) enthält und **dadurch**, dass das Lesegerät einen Formatierungsschaltkreis (3) umfasst, der eingerichtet ist, die Seriennummer (NS) des Trägers zu empfangen, auf den die digitalen Daten, die Audio- und/oder Videoinformationen repräsentieren, kopiert werden sollen, und der am Ausgang formatierte Daten (FD) liefert, die dazu bestimmt sind, in Abhängigkeit von der Seriennummer (NS) und dem geheimen Parameter (PS), auf den Träger kopiert zu werden.

10. Aufzeichnungsträger (4) für digitale Daten, die Audio- und/oder Videoinformationen repräsentieren, der eine Seriennummer (NS) umfasst, die einzigartig ist oder eine geringe Wahrscheinlichkeit aufweist, dieselbe wie diejenige eines anderen Trägers zu sein, **dadurch gekennzeichnet, dass** er außerdem abgespeicherte digitale Daten (FD) enthält, wobei die digitalen Daten (FD) in Abhängigkeit von der Seriennummer (NS) und einem geheimen Parameter (PS) formatiert werden, der in einem Lesegerät enthalten ist, das eingerichtet ist, die digitalen Daten zu lesen.
